(19) Europäisches Patentamt / European Patent Office / Office européen des brevets

(11) **EP 2 228 670 A1**

(12) **EUROPEAN PATENT APPLICATION**
published in accordance with Art. 153(4) EPC

(43) Date of publication:
**15.09.2010 Bulletin 2010/37**

(51) Int Cl.:
*G02B 5/08* (2006.01)       *B32B 27/36* (2006.01)
*C08K 7/18* (2006.01)       *C08L 67/00* (2006.01)
*G02F 1/1335* (2006.01)

(21) Application number: **07860152.3**

(22) Date of filing: **26.12.2007**

(86) International application number:
**PCT/JP2007/074923**

(87) International publication number:
**WO 2009/081492 (02.07.2009 Gazette 2009/27)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Toray Industries, Inc.**
**Tokyo 103-8666 (JP)**

(72) Inventors:
• **YOSHIDA, Tatsuo**
  **Anpachi-gun**
  **Gifu 503-2395 (JP)**
• **KIKUCHI, Akikazu**
  **Otsu-shi**
  **Shiga 520-8558 (JP)**
• **TAKAYAMA, Terufumi**
  **Anpachi-gun**
  **Gifu 503-2395 (JP)**
• **MATSUNAGA, Atsushi**
  **Mishima-shi**
  **Shizuoka 411-8652 (JP)**

(74) Representative: **Kador & Partner**
**Corneliusstrasse 15**
**80469 München (DE)**

(54) **WHITE LAMINATED POLYESTER FILM FOR REFLECTING SHEETS**

(57)     [Object] In light of the problems in the prior art, an object of the invention is to provide a white laminated polyester film for a reflective plate sheet, which has a high reflectance and a high concealing property compatible with each other, and is not easily broken and is high in productivity.

[Solving means] A white laminated polyester film for a reflecting sheet, including a polyester layer (B) containing voids therein, and a polyester layer (A) laminated at least on one surface side of the layer (B), the laminated polyester film satisfying the following (1) to (5):(1) the thickness of the polyester layer (A) laminated at least on one surface side is from 5 to 15 $\mu$m; (2) the polyester layer (A) contains therein particles having a refractive index of 2.0 or more in an amount of 3 to 15% by weight of the polyester layer (A); (3) the thickness of the polyester layer (B) is 150 $\mu$m or more; (4) the amount of particles having a refractive index of 2.0 or more contained in the polyester layer (B) is 2% or less by weight of the polyester layer (B); and (5) the polyester layer (B) contains therein a resin which is not soluble in polyester resin in an amount of 12 to 25% by weight of the polyester layer (B) and/or inorganic particles having a refractive index less than 2.0 in an amount of 30 to 50% by weight of the polyester layer (B).

[Fig. 1]

**Description**

TECHNICAL FIELD

The present invention relates to a white laminated polyester film for a reflecting sheet. More specifically, the invention relates to a polyester film that has a laminated structure, is excellent in reflecting property and concealing property, and is high in productivity. The invention relates to a white laminated polyester film that can be preferably used as a reflecting sheet of a backlight device and a lamp reflector for image display, a reflecting sheet of a lighting instrument, a reflecting sheet for a lighting signboard, a rear reflecting sheet for a solar cell, or the like.

BACKGROUND ART

A white polyester film has widely been used as a reflecting plate and a reflecting sheet of a surface light source device in a flat-panel type image displaying system, which is used in a liquid crystal display or the like, a rear reflecting sheet of a lighting signboard, a rear reflecting sheet of a solar cell, or some other article since the polyester film is even, has a high reflectance and dimensional stability, is inexpensive, and has other properties. As a method for expressing a high reflecting performance, the following method is widely used: a method of incorporating many inorganic particles made of, for example, barium sulfate into a polyester film, and making use of light reflection on interfaces between the polyester resin and the particles, and on void interfaces between fine voids generated by use of the particles as nuclei (see Patent Document 1), a method of mixing with a resin which is not soluble in polyester, thereby making use of light reflection on void interfaces between fine voids generated by use of the insoluble resin as nuclei (see Patent Document 2), a method of impregnating a polyester film with an inert gas in a pressure vessel, thereby making use of light reflection on interfaces between voids generated in the film (Patent Document 3), or any other method of making use of the refractive index difference between inorganic particles contained in a polyester film and the polyester resin, and the refractive index difference between fine voids and the polyester resin.
In recent years, in particular, applications using a liquid crystal display have been remarkably spreading. Thus, white laminated polyester films have widely been adopted for liquid crystal televisions and others besides conventional notebook-size personal computers, monitors, and portable terminals. In accordance with this situation, it has been desired that the brightness of screens and the fineness thereof are increased. Correspondingly to the increase in the brightness of screens, reflecting sheets have been required to have a higher reflectance and a higher concealing property. In accordance with the situation, it has been become necessary to increase the number of reflecting interfaces in a polyester film, for example, increase the amount of inorganic particles in a polyester film, or increase the amount of a resin which is not soluble in polyester. However, when the amount of the inorganic particles or the resin which is not soluble in polyester is increased, the film is frequently broken when biaxially stretched so that a problem that the productivity is poor is caused. Thus, it is difficult to make the productivity of films compatible with a high reflectance and a high concealing property thereof.
Thus, by incorporating titanium dioxide particles, which are largely different in refractive index from a polyester resin which is a basic structure of a film, attempts for obtaining a high reflectance and a high concealing property are made while the addition amount thereof is made small (see Patent Documents 4, 5 and 6). However, the incorporation of the titanium dioxide particles, which have a high scattering property, causes a tendency that light scattered thereby is partially lost by a loss. When the particles are added in a relatively large amount, the concealing property of the reflecting sheet is expressed; however, the reflectance is lowered by the loss of the light. Reversely, when the particles are added in a small amount, there is caused a problem that the reflectance and the concealing property of the reflecting sheet are insufficient. It is therefore difficult to make the two compatible with each other. Thus, desires have been increasing for a polyester film, which has reflectance and concealing property compatible with each other, and is not easily broken and is high in productivity.

[Patent Document 1]    JP-A-2004-330727
[Patent Document 2]    JP-A-04-239540
[Patent Document 3]    WO97/01117 pamphlet
[Patent Document 4]    JP-A-2001-225433
[Patent Document 5]    JP-A-2002-138150
[Patent Document 6]    JP-A-2004-294611

DISCLOSURE OF THE INVENTION

Problems to be solved by the invention

In light of the above-mentioned problems in the prior art, an object of the present invention is to provide a white laminated polyester film for a reflecting plate sheet, which has a high reflectance and a high concealing property compatible with each other, and is not easily broken and is high in productivity.

Means for solving the problems

In order to solve the problems, the present invention uses the following means. That is, the white laminated polyester film for a reflecting sheet of the invention is a white laminated polyester film for a reflecting sheet, including a polyester layer (B) containing voids therein, and a polyester layer (A) laminated at least on one surface side of the layer (B), the laminated polyester film satisfying the following (1) to (5) :

> (1) the thickness of the polyester layer (A) laminated at least on one surface side is from 5 to 15 $\mu$m;
> (2) the polyester layer (A) contains therein particles having a refractive index of 2.0 or more in an amount of 3 to 15% by weight of the polyester layer (A);
> (3) the thickness of the polyester layer (B) is 150 $\mu$m or more;
> (4) the amount of particles having a refractive index of 2.0 or more contained in the polyester layer (B) is 2% or less by weight of the polyester layer (B); and
> (5) the polyester layer (B) contains therein a resin which is not soluble in polyester resin in an amount of 12 to 25% by weight of the polyester layer (B) and/or inorganic particles having a refractive index less than 2.0 in an amount of 30 to 50% by weight of the polyester layer (B).

The void-containing laminated white polyester film of the present invention has the following preferred aspects (a) to (j):

> (a) the particles contained in the polyester layer (A), which have a refractive index of 2.0 or more, are titanium dioxide particles;
> (b) the thickness of the polyester layer (A) is from 5 to 10 $\mu$m, and further that of the polyester layer (B) is from 200 to 400 $\mu$m;
> (c) the titanium dioxide particles contained in the polyester layer (A) are made mainly of rutile type particles;
> (d) the titanium dioxide particles contained in the polyester layer (A) are made mainly of rutile type particles produced by a chlorine process;
> (e) one or more resins constituting the polyester layer (A) and the polyester layer (B) have polyethylene terephthalate as a basic structure thereof;
> (f) the resin which is not soluble in polyester resin, which is contained in the polyester layer (B), is a polymethylpentene;
> (g) the average particle size of the polymethylpentene in the polyester layer (B) is 3 $\mu$m or less in the width direction and is 2 $\mu$m or less in the thickness direction;
> (h) the inorganic particles having a refractive index of less than 2.0, which are contained in the polyester layer (B), are barium sulfate;
> (i) the white laminated polyester film includes, on at least one surface thereof, a coating layer having capability to absorb ultraviolet rays;
> (j) the polyester layer (A) contains therein a light resistant agent in an amount of 0.05 to 10% by weight of the polyester layer (A);
> (k) the polyester layer (A) side is used as a light reflecting surface; and
> (l) the white laminated polyester film is a rear reflecting sheet of a backlight for a liquid crystal display, a light reflecting surface of the rear reflecting sheet being in the polyester layer (A) side of the film.

EFFECTS OF THE INVENTION

According to the present invention, it is possible to yield a white laminated polyester film for a reflecting sheet, which has a high reflectance and a high concealing property which are compatible with each other, and is not easily broken when the film is produced, and is high in productivity.

BEAST MODE FOR CARRYING OUT THE INVENTION

The present inventors have made eager investigations about a solution of the problems, that is, a white laminated polyester film for a reflecting sheet, which has a high reflectance and a high concealing property compatible with each other and is not easily broken in the production of the film and is high in productivity, and as a result have found and revealed that a polyester film having a specific structure can solve the problems at a stroke.

The white laminated polyester film for a reflecting plate of the present invention is a polyester film including a polyester layer (B) containing voids therein, and a polyester layer (A) laminated at least on one surface side of the layer (B) and containing titanium dioxide particles. Dividing a film the polyester layer (B), which contains a large number of fine voids originating from inorganic particles and/or a resin which is not soluble in polyester and expresses functions of flexibility as well as cushioning properties in addition to a light reflecting function, and the polyester layer (A), which has a light diffuse reflecting function on the front surface and expresses film-formability and film-strength while the layer (A) keeps the rigidity of the film, it makes possible to produce a film having both of a high reflectance and productivity, which cannot be attained by any monolayered structure. It is preferred to laminate the polyester layer (A) and the polyester layer (B) onto each other at a stroke in a film-forming line by co-extrusion, and then stretching the laminate into two axial directions. According to a method of providing the polyester layer (A) by coating, it is difficult that a film thickness necessary for expressing sufficient rigidity is stably given.

In preferred examples of the laminated structure of the white laminated polyester film for a reflecting plate of the present invention, the polyester layer (A) and the polyester layer (B) have the following structure: two layers of A/B, and three layers of A/B/A. The laminated structure may be, for example, a laminated structure of three layers of A/B/C, wherein a polyester layer (C) other than the polyester layer (A) and the polyester layer (B) is laminated, or some other structure. It is preferred to arrange the polyester layer (A), which has a light diffuse reflecting function on the front surface, as the outermost layer on one side of the laminated structure, wherein a lamination is formed by coextrusion. In the present invention, the white laminated polyester film has the laminated structure, whereby the productivity can be improved. Since the polyester layer (B), which has many fine voids, contains a large number of nucleus agents, such as the inorganic particles for generating the voids, and the insoluble resin, the dropping-out thereof becomes a problem. When films are produced over a long period, parts contacting with the film-forming device (such as its drum, roll and coater) are contaminated so that the productivity may be damaged. It is therefore preferred to arrange the polyester layer (B) as an inner layer of the laminated structure, wherein a lamination is formed by coextrusion.

As components constituting the polyester resins used in the present invention, components described below can be given. Examples or typical examples of a dicarboxylic acid component include aromatic dicarboxylic acids, such as terephthalic acid, isophthalic acid, sodium 5-sulfoisophthalate, phthalic acid and diphenic acid, and ester derivatives thereof; aliphatic dicarboxylic acids, such as adipic acid, sebacic acid, dodecadionic acid, eicosanoic acid and dimer acid, and ester derivatives thereof; alicyclic dicarboxylic acids, such as 1,4-cyclohexanedicarboxylic acid and ester derivatives thereof; and polyfunctional acids, such as trimellitic acid and pyromellitic acid, and ester derivatives thereof. Examples or typical examples of a diol component include ethylene glycol, propanediol, butanediol, neopentyl glycol, pentanediol, hexanediol, octanediol, decanediol, cyclohexanedimethanol, diethylene glycol, triethylene glycol, polyethylene glycol, tetrametylene glycol, polyethylene glycol, and polytetramethylene glycol and other polyethers. Considering such as mechanical strength, heat resistance, and production costs of the polyester film to be produced, it is preferred that a basic structure of each of the polyester layer (A) and the polyester layer (B) in the present invention is polyethylene terephthalate. In this case, the basic structure means that the amount of polyethylene terephthalate is 50% by weight or more of the polyester resin to be contained.

In the present invention, a copolymerizable component may be introduced into the basic structure of polyethylene terephthalate. The method for the introduction of the copolymerizable component may be a method of adding the copolymerizable component to polyester pellets, which are raw materials, at the time of polymerization for the pellets and using the pellets as pellets wherein the copolymerizable component is beforehand polymerized, or a method of supplying a mixture of pellets obtained by independent polymerization, such as pellets of polybutylene terephthalate, and polyethylene terephthalate pellets into an extruder, and preparing a copolymer therefrom by transesterification when the mixture is melted. The amount of each of these copolymerizable components is not particularly limited. From the viewpoint of various properties, the amount of the dicarboxylic acid component and that of the diol component are each preferably from 1 to 50% by mol, more preferably from 1 to 20% by mol of the individual components. It is preferred to use isophthalic acid as the copolymerizable component from the viewpoint of the preventing performance of cleavage between the polyester layer (A) and the polyester layer (B), the formation stability of the film, and product costs. It is also preferred to incorporate a copolymerizable component common to the polyester layer (A) and the polyester layer (B) since the preventing performance of cleavage between the polyester layer (A) and the polyester layer (B) is further improved.

Preferred examples of a catalyst used for polycondensation reaction for the polyester resin include antimony compounds, titanium compounds, germanium compounds and manganese compounds. These catalysts may be used alone or in combination. Of these catalysts, titanium compounds and germanium compounds are preferred since a metallic catalyst aggregate is not easily produced therefrom. From the viewpoint of costs, titanium compounds are preferred. The titanium compounds that can be used are specifically titanium alkoxides such as titanium tetrabutoxide and titanium tetraisopropoxide; multiple oxides and titanium complexes wherein main metal elements are titanium and silicon, such as titanium dioxide silicon dioxide multiple oxides; and so on. Moreover, superfine particle titanium oxide, such as titanium/silicon multiple oxide (trade name: C-94) manufactured by Acordis may be used.

In the present invention, the polyester layer (A) contains therein particles having a refractive index of 2.0 or more in an amount of 3 to 15% by weight, preferably in that of 5 to 10% by weight of the polyester layer (A). If the amount of the particles having a refractive index of 2.0 or more is less than 3% by weight, a film poor in reflectance and concealing property is produced. If the amount is more than 15% by weight, loss of light is increased by scattering so that the film is poor in reflectance.

In the present invention, the amount of particles having a refractive index of 2.0 or more that are contained in the polyester layer (B) is 2% or less by weight, preferably 1% or less by weight of the polyester layer (B). If the amount of the particles having a refractive index of 2.0 or more, which are contained in the polyester layer (B), is more than 2% by weight, scatter loss of light increases in the polyester layer (B), which is a main constituent component of the laminated film, so that the produced film is poor in reflectance.

In the present invention, by the use of the high refractive index particles, the refractive index difference between the particles and the polyester resins constituting the film becomes large, and thus the light diffuse reflectivity is intensified on interfaces between the particles and the resins, whereby a high reflectance and a concealing property are obtained. The particles having a refractive index of 2.0 or more are, for example, titanium dioxide, zinc oxide, zirconium oxide, zinc sulfide, or basic lead carbonate (white lead). Titanium dioxide particles are preferred from the viewpoint of reflecting property, concealing property, light stability and production costs. If particles having a refractive index less than 2.0 are used, the refractive index difference between the particles and the polyester resins constituting the film becomes small so that the resultant film is poor in reflecting property and the concealing property.

When titanium dioxide having a refractive index more than 2.0 is used in the present invention, the titanium dioxide is preferably titanium dioxide having an anatase type crystal structure and titanium dioxide having a rutile type crystal structure. Rutile type titanium dioxide is denser in crystal structure and higher in refractive index than anatase type titanium dioxide; thus, the refractive index difference between the particles and the polyester resins becomes larger so that a higher reflecting effect can be obtained on the interfaces. It is therefore more preferred to use rutile type titanium dioxide.

Main examples of a process for producing titanium dioxide particles are a sulfate process and a chlorine process. In the sulfate process, ilmenite ore is dissolved in concentrated sulfuric acid to separate iron in the form of iron sulfate, and then the solution is hydrolyzed to precipitate and separate titanium in the form of a hydroxide. Next, the hydroxide is fired in a high-temperature rotary kiln or the like, whereby titanium dioxide can be yielded. In the meantime, in the chlorine process, rutile ore is used as a raw material, and the ore is allowed to react with chlorine gas and carbon at a high temperature of about 1000°C to produce titanium tetrachloride. The titanium tetrachloride is then separated. While being sprayed at a high rate, the resultant is oxidized, whereby titanium dioxide can be yielded. Titanium dioxide produced by the chlorine process contains a smaller amount of impurities such as vanadium, iron and manganese than one produced by the sulfate process since the former dioxide is synthesized by gas phase reaction to which only gas is related. Thus, highly pure titanium dioxide can be yielded so that light absorption loss based on the impurities is in particular favorably decreased.

The titanium dioxide used in the present invention is preferably subjected to surface treatment in order to restrain the photo-catalytic activity of the titanium dioxide or improve the dispersibility thereof in the polyester resins. In order to restrain the photo-catalytic activity, the surface treatment is based on, for example, a method of coating the surface with an inorganic oxide such as silica or alumina. In order to improve the dispersibility, the treatment is based on, for example, a method of subjecting the titanium dioxide to surface treatment with a siloxane compound, a polyol or the like.

The average particle diameter of the titanium dioxide in the present invention is preferably from 0.1 to 0.5 $\mu$m. The wavelength at which the light reflecting power of any titanium dioxide is exhibited at maximum is a wavelength about two times the average particle diameter of the titanium dioxide. Thus, the average particle diameter of the titanium dioxide is in particular preferably from 0.2 to 0.4 $\mu$m. If the average particle diameter of the titanium dioxide is less than 0.1 $\mu$m, the titanium dioxide particles aggregates easily so that the particles tend not to be easily dispersed. If the average particle diameter is more than 0.5 $\mu$m, the reflecting efficiency tends to fall in the visible ray wavelength range.

The average particle diameter of the titanium dioxide particles referred to herein is a value obtained by subjecting the laminated film to incinerating treatment, observing the particles with a scanning electron microscope (SEM) at a magnifying power of 20000, and then calculating the number-average particle diameter of 50 out of the observed particles.

In the present invention, the polyester layer (B) contains voids therein. By the matter that the layer (B) contains voids therein, the refractive index difference between the polyester resin and the voids is used to make it possible to heighten the reflectance while scatter loss is restrained. Examples of a method for incorporating fine voids into the polyester layer (B) to express a high reflectance and a concealing property include a method (1) of incorporating a foaming agent into the polyester, and generating foam by heating when the polyester is extruded or the layer is formed, or generating foam by chemical decomposition to form the voids, a method (2) of adding, when the polyester is extruded, gas or a vaporizable material thereto, a method (3) of adding, to the polyester, a thermoplastic resin which is not soluble in the polyester (insoluble resin), and then stretching the resultant monoaxially or biaxially to generate fine voids, and a method (4) of adding a large amount of inorganic fine particles capable of forming bubbles instead of the insoluble resin. In the present invention, from the comprehensive viewpoint of the performance of the film formation, the easiness of the adjustment of the amount of the voids incorporated into the inside, the easiness of a matter that the voids are made finer and evener in size, the lightness of the film, and others, it is necessary to use the method (3), wherein the insoluble resin is used, and the method (4), wherein the inorganic particles are used. In the present methods, a larger number of interfaces on which light is reflected are produced inside the polyester as the content (s) of the resin which is not soluble in polyester and/or the inorganic particles is/are larger and the stretch ratio is higher in the biaxial stretching step. As a result, a higher reflectively and a concealing property can be expressed.

The insoluble resin referred to herein is a thermoplastic resin that is different from polyester and exhibits insolubility in polyester. The resin is preferably a resin that is dispersed in a particulate form in polyester and has a large effect of forming voids in the film when the resin is stretched. More specifically, the insoluble resin is a resin about which the following matter is caused: a matter that when a system wherein the insoluble resin and a polyester are melted is measured with a known method, preferably differential scanning calorimetry, dynamic viscoelasticity analysis or some other method, besides a glass transition temperature (hereinafter abbreviated to Tg) corresponding to the polyester, a Tg, which corresponds to the insoluble resin, is observed.

Of the insoluble resins, the following are preferably used: crystalline polyolefin resins such as polyethylene, polypropylene, polybutene and polymethylpentene, non-crystalline cyclic olefin resins such as bicyclo[2,2,1]hept-2-ene, 6-methylbicyclo[2,2,1]hept-2-ene, 5,6-dimethylbicyclo[2,2,1]hept-2-ene, 1-methylbicyclo[2,2,1]hept-2-ene, 6-ethylbicyclo[2,2,1]hept-2-ene, 6-n-butylbicyclo[2,2,1]hept-2-ene, 6-i-buytlbicyclo[2,2,1]hept-2-ene, 7-methylbicyclo[2,2,1]hept-2-ene, tricyclo[4,3,0,1$^{2.5}$]-3-decene, 2-methyl-tricyclo[4,3,0,1$^{2.5}$]-3-decene, 5-methyl-tricyclo[4,3,0,1$^{2.5}$]-3-decene, tricyclo[4,4,0,1$^{2.5}$]-3-decene, and 10-methyl-tricyclo[4,4,0,1$^{2.5}$]-3-decene, polystyrene resins, polyacrylate resins, polycarbonate resins, polyacrylonitrile resins, polyphenylenesulfide resins, and fluorine-contained resins. These insoluble resins may each be a homopolymer or a copolymer. Furthermore, two or more insoluble resins may be used together. Of these resins, polyolefin resins small in surface tension, such as polypropylene and polymethylpentene, are preferred, and polymethylpentene is most preferred. Since polymethylpentene has a relatively large difference in surface tension from polyester, and further has a high melting point, polymethylpentene has a feature of producing a large effect of forming voids for the addition amount thereof. Thus, polymethylpentene is particularly preferred as the insoluble resin.

The content of the insoluble resin in the polyester layer (B) in the present invention is from 12 to 25% by weight, preferably from 15 to 20% by weight of the whole of the polyester layer (B). If the content is less than the range, a film poor in reflectance and concealing property is produced. Reversely, if the content is more than the range, the apparent density of the whole of the film becomes too low. Thus, when the film is stretched, a film breaking or the like is easily generated so that the productivity is lowered; and moreover, the rigidity of the produced polyester film is low so that the film is not easily handled.

In the present invention, the insoluble resin is used as nuclei to form fine voids. In the invention, the fine voids can be observed in a cross section (in the thickness direction) of the polyester layer (B) with a scanning electron microscope (SEM), a transmission electron microscope (TEM), or the like.

In a case where the polyester layer (B) contains the insoluble resin in the present invention, the voids generated by the use of the insoluble resin as nuclei are preferably independent of each other. About the size of the voids, the average size of the widths of the voids observed in sections obtained by cutting the film in the machine direction and the width direction thereof is preferably from 3 to 25 $\mu$m, more preferably from 5 to 20 $\mu$m. The average size of the thicknesses of the voids is preferably from 0.3 to 10 $\mu$m, more preferably from 0.5 to 5 $\mu$m. If the average size of the widths of the voids is more than 25 $\mu$m or the average size of the thicknesses of the voids is more than 10 $\mu$m, the difference between cushioning properties in the laminated film surface partially becomes large, whereby the reflectance becomes uneven or at the time of the formation of the film, a breakage is easily generated. If the average size of the widths of the voids is less than 3 $\mu$m or the average size of the thicknesses of the voids is less than 0.3$\mu$m, a sufficient reflectance may not be obtained. The machine direction referred to herein is a direction along which the film is fed in the film-producing process. The direction perpendicular to the machine direction is defined as the width direction. The average size of the thicknesses of the voids and that of the widths thereof referred to herein are as follows: the film is subjected to freeze treatment, and then cut along the machine direction and the width direction to give sections. A scanning electron microscope (for example, (SEM) S-2100 A model (manufactured by Hitachi, Ltd.)) is used to magnify the sections 4000 times, and the magnified sections are observed and photographed. From the resultant section photographs, it is examined whether or not fine voids are present. About the void sizes and the insoluble resin sizes, the lengths thereof in the width direction and the thickness direction are measured from the observed photographs, and then the sizes of the individual voids and the individual insoluble resins are obtained by making inverse operations based on the magnifying power. About the average value of the void sizes and that of the insoluble resin sizes, 50 voids and 50 insoluble resins are selected from the voids and the insoluble resins on the sectional photograph of the section obtaining by the cutting along the machine direction, and 50 voids and 50 insoluble resins are selected from those on the sectional photograph of the section obtained by the cutting along the width direction. In short, totally, 100 voids and 100 insoluble resins are selected. Thereabout, the sizes in the width direction and the sizes in the thickness direction are obtained, and then the resultant sizes are averaged into average values. When the machine direction and the width direction of a film sample are unclear, the sample is cut along any two planes perpendicular to each other to give sections, and then the sections are measured.

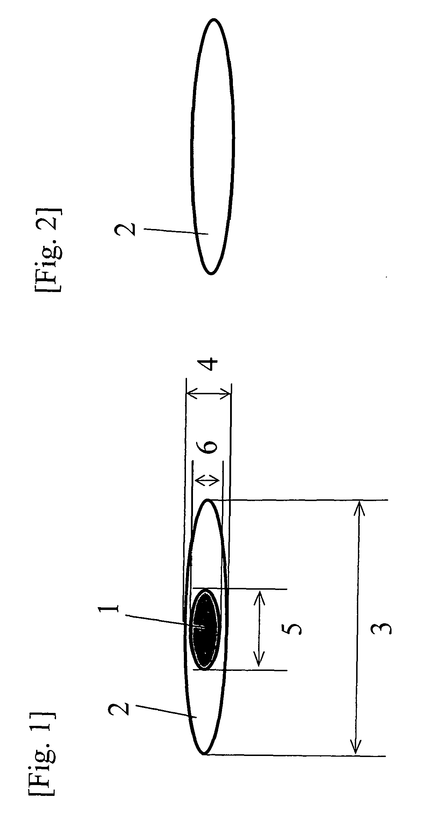

About the void size and the insoluble resin size, sizes shown in Fig. 1 are measured. Voids wherein no insoluble resin is observed as illustrated in Fig. 2 are excluded.

The average size of the insoluble resin in the width direction in the polyester layer (B) used in the present invention is preferably 7 $\mu$m or less, more preferably 3 $\mu$m or less. The average thickness is 3 $\mu$m or less, more preferably 2 $\mu$m or less. If the average size of the insoluble resin in the width direction is more than 7 $\mu$m or the average size in the thickness direction is more than 3 $\mu$m, the reflectance falls or at the time of forming the film, a breakage may easily be generated. The insoluble resin is preferably dispersed finely into the polyester resin. However, if the average size in each of the width direction and the thickness direction is less than 0. 5 $\mu$m, voids generated in the stretching step tend to be clogged in a subsequent heat treating treatment so that the voids cannot be unfavorably kept. About the average size of the insoluble resin in the width direction, and the average thickness of the resin, the above-mentioned method is used.

A method for controlling the average dispersion diameter of the insoluble resin within the above-mentioned preferred range is not particularly limited. The preferred method thereof is, for example, a method of adding a dispersing agent besides the polyester and the insoluble resin. The addition of the dispersing agent makes it possible to make the dispersion diameter of the insoluble resin small, thereby making voids generated by stretching finer. As a result, the reflectance and the total light transmittance of the film, and the stability of the formation of the film can be improved. Usable examples of the dispersing agent exhibiting the advantageous effects include olefin based polymers or copolymers having a polar group such as a carboxyl group or an epoxy group, or a functional group reactive with polyester; diethylene glycol; polyalkylene glycols; surfactants; and thermal adhesive resins. Of course, these may be used alone or in combination of two or more thereof. Particularly preferred is a copolymerized resin of polyalkylene glycol and a polyester resin made from an aliphatic diol component having 2 to 6 carbon atoms and terephthalic acid from the viewpoint of improving in the solubility between the copolymerized resin and the polyester resin that is a main constituting unit of the polyester layer (B), and the dispersibility of the insoluble resin. A block copolymer of polyethylene glycol and polybutylene terephthalate is particularly preferred. The dispersing agent may be used as a polyester wherein the dispersing agent is beforehand copolymerized in the polymerization reaction, or may be used directly as it is.

The addition amount of the dispersing agent used in the present invention is preferably from 0.05 to 10% by weight, more preferably from 0.1 to 7% by weight, even more preferably from 0.2 to 5% by weight of the whole of the polyester layer (B), wherein the dispersing agent is contained. If the addition amount is less than 0.05% by weight, the effect of making the bubbles fine may become small. If the addition amount is more than 10% by weight, reversely, the effect based on the addition of the insoluble resin becomes small so that a fall in the production stability, an increase in costs, and some other problem are easily caused.

When the polyester layer (B) contains inorganic particles having a refractive index less than 2. 0 in the present invention, voids generated by the use of the inorganic particles as nuclei are preferably independent of each other. About the size of the voids, the average size of the widths of the voids observed in cross sections obtained by cutting the film in the machine direction and the width direction thereof is preferably from 1 to 25 $\mu$m, more preferably from 2 to 20 $\mu$m. The average size of the thicknesses of the voids is preferably from 1 to 10 $\mu$m, more preferably from 0.3 to 5 $\mu$m. When the inorganic particles are used, the particles do not easily re-aggregate after the film raw materials are extruded than when the insoluble resin is used and it does not occur that the nuclei are thermally deformed in thermal treatment in the film-producing process so that the porosity falls. As a result, voids small in average size can be contained in a large amount. Thus, the use of the inorganic particles is preferred. However, when the inorganic particles are used, reversely, voids between the polyester resins are not easily generated. Thus, in order to attain high-level reflection and high-level concealment, it is necessary to incorporate the inorganic particles in a large amount. If the average size of the widths of the voids is larger than 25 $\mu$m or the average size of the thicknesses of the voids is more than 10 $\mu$m, the difference between cushioning properties in the laminated film surface partially becomes large, whereby spots are generated in the external appearance or at the time of the formation of the film, a breakage is easily generated. If the average size of the widths of the voids is less than 1 $\mu$m or the average size of the thicknesses of the voids is less than 0.3 $\mu$m, a sufficient reflectance may not be obtained. The machine direction referred to herein is a direction along which the film is fed in the film-producing process. The direction perpendicular to the machine direction is defined as the width direction. The average sizes are values measured in the same way as in the measurement of the above-mentioned void sizes and the insoluble resin sizes.

Examples of the inorganic particles having a refractive index less than 2.0, which are preferably used in the polyester layer (B) in the present invention, include particles of wet silica, dry silica, colloidal silica, calcium carbonate, aluminum silicate, calcium phosphate, alumina, magnesium carbonate, zinc oxide (zinc white), magnesium oxide, barium carbonate, zinc carbonate, barium sulfate, calcium sulfate, mica, talc, clay and kaolin. Barium sulfate is particularly preferred.

About the inorganic particles having a refractive index less than 2.0, the average particle diameter thereof is preferably from 0.05 to 10 $\mu$m, more preferably from 0.1 to 3 $\mu$m in the polyester. If the average particle diameter is more than 10 $\mu$m, the film is broken when stretched, filter clogging is generated and some other is caused so that the productivity unfavorably falls. If the average particle diameter is 0.05 $\mu$m or less, the reflectance at long wavelengths unfavorably falls. The average particle diameter used herein means the number-average particle diameter. The content of the inorganic particles having a refractive index less than 2.0 in the present invention is from 30 to 50% by weight, preferably from 35 to 45% by weight of the polyester layer (B). If the content is smaller than the range, a film poor in reflectance and total light transmittance is produced. Reversely, if the content is more than the range, the film is easily broken or caused to undergo some other damage when stretched so that the productivity may fall. The inorganic particles having a refractive index less than 2.0 may also be contained in the polyester layer (A).

In the present invention, the polyester layer (B) may contain both of the inorganic particles having a refractive index less than 2.0 and the resin which is not soluble in polyester. When the insoluble resin is used as a nucleus agent, flat and large voids are easily formed so that light can be reflected over a wide wavelength. However, the void size itself is large so that the number of the voids tends to be decreased. When the content of the resin which is not soluble in polyester is increased, the insoluble resin dispersion size becomes large so that the film is broken in the film-forming process and some other problem is caused. Thus, in a case where an even higher reflectance is desired, a problem that the reflectance is not easily improved is caused. In the case of using the inorganic particles having a refractive index less than 2.0, such as barium sulfate, the content thereof in the polyester film can be made larger than in the case of using the insoluble resin. Thus, voids small in size can be formed in a large number. The former case is excellent in that the reflectance at short wavelengths can be made high. However, voids large in size are not easily formed so that the reflectance at long wavelengths is poor. Therefore, when large voids based on the resin which is not soluble in polyester are combined with small voids based on the inorganic particles having a refractive index less than 2. 0, the two voids can mutually compensate for drawbacks of the two.

In the present invention, the thickness of the polyester layer (A) at least on one side is from 5 to 15 $\mu$m, preferably from 5 to 10 $\mu$m. If the thickness of the polyester layer (A) is less than 5 $\mu$m, the contribution of the particles having a refractive index more than 2.0 in the polyester layer (A) to the diffuse reflection on the surface area is decreased so that the reflectance is poor. Additionally, the thickness of the polyester layer (A), which is high in rigidity, becomes small so that the rigidity of the polyester film falls, the film is broken when produced or some other problem is frequently caused. If the thickness of the polyester layer (A) is more than 15 $\mu$m, loss based on light diffusion in the polyester layer (A) increases so that the reflectance falls.

In the present invention, the thickness of the polyester layer (B) is 150 $\mu$m or more, preferably from 200 to 400 $\mu$m. In the invention, light reflecting performance is expressed mainly by the voids in the polyester layer (B). If thickness of this polyester layer (B) is less than 150 $\mu$m, a film poor in reflectance and concealing property is produced. The upper limit of the thickness of the polyester layer (B) is not particularly limited, and is preferably 500 $\mu$m or less from the viewpoint of the productivity and costs of the polyester film.

As described above, basic light reflecting performance is expressed by a thick layer of the polyester layer (B), wherein light diffusion loss is small, while the reflecting efficiency is made high in a region near the film surface through which light is radiated to the film inside by laminating the polyester layer (A), which is thin and has a highly effective reflecting power, on the surface. In this way, light diffusion loss is restrained to a low level while a high reflectance-increasing effect can be obtained in spite of a relatively low content of titanium dioxide. Thus, it is preferred from the viewpoint of reflectance to use the polyester layer (A) side of the white laminated polyester film of the present invention as a light reflecting surface.

About the thickness of each of the polyester layers, the length of the polyester layer in the thickness direction is measured from the above-mentioned section-observed photographs obtained by a scanning microscope, and then the thickness of the layer is obtained by making an inverse operation based on the magnifying power. When the thickness of each of the polyester layers is obtained, the used section-observed photographs are sectional photographs of 5 points selected at will from viewed fields for measurement different from each other in a section obtained by cutting the layer along the width direction thereof. The measured values are averaged into the average value thereof. When the machine direction and the width direction of a film sample are unclear, a section thereof along an arbitrary direction may be measured.

In the present invention, the apparent density of the whole of the film is preferably from 0.5 to 1.3 g/cm$^3$, more

preferably from 0. 6 to 1.3 $g/cm^3$, in particular preferably from 0.7 to 1.3 $g/cm^3$. The apparent density of the void-containing laminated white polyester film is decreased by the fine voids contained in the polyester layer (B) so that it is adjusted to the preferred range. If the apparent density is less than 0.5, the strength of the film is poor so that the film may be broken, or the film wrinkles are generated at the time of dimensional processing. Additionally, in the production process of the film, breakages are frequently generated so that the productivity is poor, and other problems are unfavorably caused. If the apparent density is more than 1.3 $g/cm^3$, the amount of the voids present in the polyester is insufficient so that the reflectance deteriorates. In the present invention, the apparent density of a film is a value obtained by cutting the film into a size 100 mm x 100 mm, measuring the thicknesses at 10 points therein with an instrument wherein a measuring probe having a diameter of 10 mm is attached to a dial gauge, calculating the average d ($\mu$m) of the thicknesses, weighing the film with a direct-reading balance, reading the weight w (g) up to the order of $10^{-4}$ g, and making a calculation.

In the present invention, an antioxidant is incorporated into the polyester layer (B) preferably in an amount of 0.05 to 1.0% by weight, more preferably in that of 0.1 to 0.5% by weight of the polyester layer (B), thereby making it possible to attain the extrusion of the polymer and the formation of the film more stably. The antioxidant is in particular preferably a hindered phenol or hindered amine antioxidant from the viewpoint of the dispersibility thereof.

Organic particles may be used as particles usable in the present invention. Examples of the organic particles include crosslinked polymeric particles, calcium oxalate, acrylic particles, and imide particles.

In the white laminated polyester film for a reflecting plate of the present invention, at least one of the polyester layers may contain a light resistant agent. In a preferred aspect, the polyester layer (A) contains the agent. When the film contains the light resistant agent, the color tone of the film is prevented from being changed by ultraviolet rays. A light resistant agent used preferably in the present invention is not particularly limited within a range where other properties are not damaged. It is desired to select a light resistant agent that is excellent in heat resistance, has good affinity with polyester resin and is evenly dispersible, and is scarcely colored so that a bad effect is not given to the reflecting property of the film. Examples of the light resistant agent include salicylic acid type, benzophenone type, benzotriazole type, cyanoacrylate type, and triazine type ultraviolet absorbents, and hindered amine ultraviolet stabilizers. Specific examples thereof include p-t-butylphenyl salicylate, and p-octylphenyl salicylate, which are each of a salicylic acid type; 2,4-dihydroxybenzophenone, 2-hydroxy-4-methoxybenzophenone, 2-hydroxy-4-methoxy-5-sulfobenzophenone, 2,2',4,4'-tetrahydroxybenzophenone, and bis(2-methoxy-4-hydroxy-5-benzoylphenyl)methane, which are each of a benzophenone type; 2-(2'-hydroxy-5'-methylphenyl)benzotriazole, 2-(2'-hydroxy-5'-methylphenyl)benzotriazole, 2,2'-methylenebis[4-(1,1,3,3-tetramethylbutyl)-6-(2H benzotriazole-2-yl)phenol], which are each of a benzotriazole type; ethyl-2-cyano-3,3'-diphenyl acrylate, which is of a cyanoacrylate type; and 2-(4,6-diphenyl-1,3,5-triazine-2-yl)-5-[(hexyl)oxy]-phenol, which is of a triazine type.

Examples of the ultraviolet stabilizer include bis(2,2,6,6-tetramethyl-4-piperidyl) sebacate, and a polycondensated product of dimethyl succinate/1-(2-hydroxyethyl)-4-hydroxy-2,2,6,6-tetramethylp iperidine, which are each of a hindered amine type; and other stabilizers such as nickel bis(octylphenyl)sulfide, and 2,4-di-t-butylphenyl-3',5'-di-t-butyl-4'-hydroxybenzoate. Of these light resistant agents, the use of the following are preferred because of excellent solubility in polyester: 2,2',4,4'-tetrahydroxybenzophenone, bis(2-methoxy-4-hydroxy-5-benzoylphenyl)methane, 2,2'-methylenebis[4-(1,1,3,3-tetramethylbutyl)-6-(2H benzotriazole-2-yl)phenol], and 2-(4,6-diphenyl-1,3,5-triazine-2-yl)-5-[(hexyl)oxy]-phenol. The light resistant agents may be used alone or in combination of two or more thereof.

The content of the light resistant agent in the white laminated polyester film for a reflecting plate of the present invention is preferably from 0.05 to 10% by weight, more preferably from 0.1 to 5% by weight, even more preferably from 0.15 to 3% by weight of the layer containing the light resistant agent. If the content of the light resistant agent is less than 0.05% by weight, the light resistance is insufficient so that the color tone is largely changed when the film is stored for a long term. If the content of the light resistant agent is more than 10% by weight, the color tone of the film is changed by coloring based on the light resistant agent and further the light resistant agent itself absorbs light so that the reflectance may lower.

In the white laminated polyester film for a reflecting plate of the present invention, excellent light resistance and light reflectance can be made compatible with each other by using the light resistant agent and titanium oxide.

In the present invention, it is preferred that a coating layer having capability to absorb ultraviolet rays is provided on at least one side of the film since the film can be prevented from yellowing when used for a long term. The ultraviolet absorbing layer may be made of a single layer or a plurality of layers. When the ultraviolet absorbing layer is made of a plurality of layers, any one of the layers is a layer containing an ultraviolet absorbent. It is preferred that two or more of the layers are each a layer containing an ultraviolet absorbent from the viewpoint of keeping the weather resistance. The ultraviolet absorbing layers may be obtained by incorporating or copolymerizing, into or with a resin component such as a thermoplastic, thermosetting or active energy ray curable resin, an ultraviolet absorbent, for example, an ultraviolet shielding agent of a benzophenone, benzotriazole, triazine, cyano acrylate, salicylate, benzoate or inorganic type, and then making the resultant into a lamination. In particular, an ultraviolet absorbent of a benzotriazole type is more preferred.

A monomer as the benzotriazole type ultraviolet absorbent is not particularly limited as far as the monomer is a monomer having benzotriazole as a basic structure thereof, and further having an unsaturated double bond. Preferred examples of the monomer include 2-(2'-hydroxy-5'-acryloyloxyethylphenyl)-2H-benzotriazole, 2-(2'-hydroxy-5'-methacryloxyethylphenyl)-2H-benzotriazole, and 2-(2'-hydroxy-3'-tert-butyl-5'-acryloyloxyethylphenyl)-5-ch loro-2H-benzotriazole. Examples of an acrylic monomer and/or an acrylic oligomer copolymerizable with these monomers include alkyl acrylates, alkyl methacrylates, and monomers each having a crosslinking functional group, such as monomers each having a carboxyl group, a methylol group, an anhydride group, sulfonic acid group, an amide group, an amino group, a hydroxyl group, an epoxy group, or some other group.

In the coating layer having capability to absorb ultraviolet rays, which is preferably used in the present invention, one or more of the acrylic monomers and/or the acrylic oligomers may be copolymerized at any proportion. Methyl methacrylate or styrene is polymerized preferably in an amount of 20% or more, more preferably in that of 30% or more by weight of the acrylic monomer(s) from the viewpoint of the hardness of the laminated film. About the copolymerization ratio between the benzotriazole type monomer (s) and the acrylic monomer(s), the proportion of the benzotriazole type monomer (s) is 10% or more and 70% or less by weight, preferably 20% or more and 65% or less by weight, even more preferably 25% or more and 60% or less by weight of the total of the two from the viewpoint of the durability and the adhesive property onto the base film. The molecular weight of the copolymer is not particularly limited, and is preferably 5000 or more, more preferably 10000 or more from the viewpoint of the durability of the coating film. A method for producing the copolymer may be based on, for example, radical polymerization, and is not particularly limited. The copolymer is laminated on the base film in the form of an organic solvent or water-dispersed product. The thickness thereof is usually from 0.5 to 15 $\mu$m, more preferably from 1 to 10 $\mu$m, even more preferably from 1 to 5 $\mu$m from the viewpoint of the light resistance.

Organic and/or inorganic particles may be added to the coating layer having capability to absorb ultraviolet rays in the present invention in order to adjust the glossiness of the surface or attain some other purpose. It is allowable to use, for inorganic particles, silica, alumina, titanium dioxide, zinc oxide, barium sulfate, calcium carbonate, zeolite, kaolin, talc or the like, and use, for organic particles, a silicone compound, crosslinked styrene, a crosslinked acrylic compound, crosslinked melamine or the like. The particle diameter of the organic and/or inorganic particles is preferably from 0.05 to 15 $\mu$m, preferably from 0.1 to 10 $\mu$m. The content thereof is preferably from 5 to 50% by dry weight, more preferably from 6 to 30% by dry weight, and even more preferably from 7 to 20% by dry weight of the coating layer having capability to absorb ultraviolet rays. When the particle diameter of the contained particles is set in the range, the particles are favorably prevented from dropping out and additionally the glossiness of the surface can be adjusted.

Various additives may be added to the coating layer having capability to absorb ultraviolet rays in the present invention as far as the advantageous effects of the invention are not hindered. Examples of the additives include a fluorescent whitening agent, a crosslinking agent, a heat resistant stabilizer, an antistatic agent, and a coupling agent.

The coating layer having capability to absorb ultraviolet rays may be applied by any method. The method may be, for example, gravure coating, roll coating, spin coating, reverse coating, bar coating, screen coating, blade coating, air knife coating, dipping or extrusion laminating. The method is in particular preferably a method of applying the layer by kiss coating using a micro-gravure roll since the coating external appearance and the evenness of the glossiness are excellent. When the coating layer is cured after the application, the curing method may be a known method. Examples thereof include thermal curing, and methods using active rays, such as ultraviolet rays, electron rays or radial rays; and any combination thereof. In the present invention, preferred is a thermal curing method using a hot wind oven, or an ultraviolet curing method using ultraviolet rays. A method for providing the coating layer may be a method of applying the layer at the same time when the base film is produced (in-line coating) or a method of applying the layer onto the base film the crystal orientation of which has been completed (off-line coating).

About the white laminated polyester film for a reflecting sheet of the present invention, the heating shrinkage ratio thereof in the machine direction and that in the width direction are each preferably 0.5% or less, more preferably from 0.0 to 0.3%, even more preferably from 0.0 to 0.1% or less when the film is heated at 80˚C for 30 minutes. If the heating shrinkage ratio is more than 0.5%, the dimensional change of the reflecting film becomes large so that the flatness of the film deteriorates. Thus, brightness unevenness may be unfavorably generated. The heating shrinkage ratio is preferably more than 0%. If the ratio is less than 0.0%, that is, the film is extendable when heated, the film is extended by heat from a cold cathode tube or by some other causes after the film is set into a backlight unit. Thus, the film easily undergoes flexure or waving. A method for setting the heating shrinkage ratio to less than 0.5% is not particularly limited, and is usually a method of lowering the stretch ratio when a biaxially stretched film is produced, raising the thermal treatment temperature, or subjecting the film to relaxing treatment in the width direction and/or the machine direction at the same time when the film is thermally treated. In order to obtain predetermined heating shrinkage ratios in both of the machine direction and the width direction, it is preferred that the film is also subjected to relaxing treatment in the machine direction. About the relaxing treatment, it is preferred from the viewpoint of production costs to use a method of conducting the treatment when a biaxially stretched polyester film is produced (in-line treatment). It is allowable to conduct a method of allowing a once-produced film to pass again into an oven, and then subjecting the film to the relaxing treatment (off-line treatment).

The following will describe an example of a process for producing the white laminated polyester film for a reflecting sheet of the present invention. However, the invention is not limited only to the example.

In order to form polyester layers (A), in a composite film-forming machine having an extruder (A) and an extruder (B), master pellets composed of polyester pellets having a melting point of 230 to 280°C and titanium dioxide particles are first mixed with each other to give the proportion of the titanium dioxide particles in the range of 3 to 15% by weight. The mixture is sufficiently vacuum-dried. If necessary, other inorganic particles and an ultraviolet absorbent may be added to this dry material. Next, the dry material is supplied to the extruder (A) heated to a temperature of 240 to 300°C, melt-extruded, filtrated through a filter having a mesh of 10 to 50 μm, and then introduced into a T-die composite cap. In the meantime, in order to form a polyester layer (B), vacuum-dried polyester pellets and pellets of a resin which is not soluble in polyester, which is vacuum-dried if necessary, are mixed with each other to set the amount of the insoluble resin to the range of 12 to 30% by weight of the polyester layer (B) and/or that of inorganic particles to the range of 30 to 50% by weight of the polyester layer (B). This is supplied to the extruder (B) heated to a temperature of 260 to 300°C, and then in the same manner as in the case of the polyester layer (A), the mixture is melted, filtrated and introduced into the T-die composite cap. If necessary, a dispersing agent may be added to this raw material in an amount of 0.05 to 10% by weight. For the addition of the insoluble resin, the resin made beforehand into master chips may be used in a state where the chips are vacuum-dried. Inside the T-die composite cap, the polymer in the extruder (B) is located at the center and the polymer in the extruder (A) is located at both sides thereof to make a lamination of A/B/A, and the polymers are co-extruded into a sheet form. In this way, a melted laminated sheet is yielded.

This melted laminated sheet is allowed to adhere onto a drum cooled to the surface temperature of 10 to 60°C by static electricity, and cooled and solidified. In this way, a non-stretched laminated film is produced. The non-stretched laminated film is introduced into a group of rolls heated to a temperature of 70 to 120°C and is stretched 3 to 4 times in the machine direction (the longitudinal direction, that is, the film-advancing direction). The film is then cooled between rolls having a temperature of 20 to 50°C.

Subsequently, the film is introduced into a tenter while both ends of the film are grasped with clips. The film is stretched 3 to 4 times in the direction perpendicular to the machine direction (the width direction) in an atmosphere heated to a temperature of 90 to 150°C.

The stretch ratio is set to 3 to 5 in the each of the machine direction and the width direction. The area ratio (the longitudinal stretch ratio x the transverse stretch ratio) is preferably from 9 to 15. If the area ratio is less than 9, the reflectance and the concealing property of the resultant biaxially stretched laminated film and the film strength become insufficient. Reversely, if the area ratio is more than 15, the film tends to be easily broken when stretched.

In order to complete the crystal orientation of the resultant biaxially stretched laminated film and give flatness and dimensional stability to the film, the film is successively subjected to thermal treatment at a temperature of 150 to 240°C in the tenter for 1 to 30 seconds. The film is evenly and slowly cooled, and then cooled to room temperature. Thereafter, if necessary, the film is subjected to corona discharge treatment or the like for making the adhesive property to other materials high. The film is then wound to make it possible to yield a void-containing white laminated polyester film of the present invention. In the step of the thermal treatment, the film may be subjected to treatment for a relaxation of 3 to 12% in the width direction or the machine direction if necessary.

The biaxial stretching may be either sequential biaxial stretching or simultaneous biaxial stretching. In the case of using simultaneous biaxial stretching, the film can be prevented from being broken in the production process thereof, or a transfer defect generated by the adhesion of the polyester layer (A) onto the heating roll is not easily generated. After the biaxial stretching, the film may again be stretched in either the machine direction or the width direction.

A coating layer having capability to absorb ultraviolet rays is provided onto the thus-obtained white laminated biaxially-stretched polyester film by kiss coating using a micro-gravure plate. The resultant is dried at 80 to 140°C and then irradiated with ultraviolet rays to cure the coating layer. Before the layer having capability to absorb ultraviolet rays is applied, the formation of an easily adhesive layer, or some other pre-treatment may be conducted.

[Method for Measuring Properties and Method for Evaluating the Same]

The property values in the present invention are obtained by the following evaluating methods and evaluating criteria:

(1) Size of fine voids inside film, size of insoluble resin therein, and thickness of polyester layer therein.

A film was subjected to freeze treatment, and then cut along the machine direction and the width direction to give sections. A scanning electron microscope (SEM) S-2100 A model (manufactured by Hitachi Ltd.) was used to magnify the sections 4000 times, and the magnified sections were observed and photographed. From the resultant section photographs, it was examined whether or not fine voids are present.

About the void sizes and the insoluble resin sizes, the lengths thereof in the width direction and the thickness direction were measured from the photographs of the sections observed with the scanning microscope, and then the sizes of the individual voids and the individual insoluble resins were obtained by making inverse operations based on the magnifying power. About the average value of the void sizes and that of the insoluble resin sizes, 50 voids and 50 insoluble resins were selected from the voids and the insoluble resins on the sectional photograph of the section obtaining by the cutting along the machine direction, and 50 voids and 50 insoluble resins were selected from those on the sectional photograph of the section obtained by the cutting along the width direction. In short, totally, 100 voids and 100 insoluble resins were selected. Thereabout, the sizes in the width direction and the sizes in the thickness direction were obtained, and then the resultant sizes were averaged into average values. When the machine direction and the width direction of a film sample are unclear, the sample is cut along any two planes perpendicular to each other to give sections, and then the sections are measured.

About the void size and the insoluble resin size, sizes shown in Fig. 1 were measured. Voids wherein no insoluble resin was observed as illustrated in Fig. 2 were excluded.

About the thickness of each of the polyester layers, the length of the polyester layer in the thickness direction was measured from the above-mentioned section-observed photographs obtained by the scanning microscope, and then the thickness of the layer was obtained by making an inverse operation based on the magnifying power. When the thickness of each of the polyester layers was obtained, the used section-observed photographs were sectional photographs of 5 points selected at will from viewed fields for measurement different from each other in a section obtained by cutting the layer along the width direction thereof. The measured values were averaged into the average value thereof. When the machine direction and the width direction of a film sample are unclear, a section thereof along an arbitrary direction may be measured.

(2) Apparent density

A film was cut into a size 100 mm x 100 mm, and the thicknesses at 10 points therein are measured with an instrument wherein a measuring probe (No. 7002) having a diameter of 10 mm is attached to a dial gauge (No. 2109-10, manufactured by Mitutoyo) . The average d ($\mu$m) of the thicknesses was calculated. Moreover, the film was weighed with a direct-reading balance, and the weight w (g) was read out up to the order of $10^{-4}$ g. A value calculated from the following equation was defined as the apparent density:

$$\text{(Apparent density)} = w/d \times 100 \ (g/cm^{3})$$

(3) Average reflectance

An integrating sphere attachment device (ISR 2200, manufactured by Shimadzu Corporation) was attached to a spectrophotometer (UV 2450, manufactured by Shimadzu Corporation). Barium sulfate was used as a standard plate, and under conditions described below, measurement was made about the reflectance of a film relative to that of the standard plate, which is regarded as 100%. In the wavelength range of 420 to 670 nm, the average of the relative reflectances at individual wavelengths having, between any two thereof, a wavelength interval of 10 nm was defined as the average reflectance. The film was judged on the following criterion:

⊙: Very good      (102% or more)
○: Good          (101% or more and less than 102%)
△: Slightly poor   (100% or more and less than 101%)
✕: Poor          (less than 100%)

⊙, ○ and △ are successful or acceptable.

<Measuring conditions>

Scanning rate: middle rate
Slit: 5.0 nm
Reflection angle: 8˚

<Standard plate forming method>

Thirty four grams of a barium sulfate white standard reagent (EASTMAN White Reflectance Standard Cat No. 6091) was put into a columnar depression having a diameter of 50.8 mm and a depth of 9.5 mm, and then a glass plate was used to compress the reagent to form a barium sulfate white standard plate having a compression density of about 2 g/cm$^3$.

As an index for evaluating the capability to absorb ultraviolet rays, the average reflectance in the range of 320 to 360 nm was measured in the same manner as described above. When the reflectance is less than 10%, the capability of the film is good.

(4) Concealing property

A haze meter (HZ-2, manufactured by Suga Test Instruments) was used to measure the total light transmittance of a polyester film in accordance with JIS K7105 (1981), and then the concealing property thereof was judged in accordance with the following criterion:

⊙: Very good (The total light transmittance is less than 2.0.)
○: Good (The total light transmittance is 2.0% or more and less than 2.5%.)
△: Slightly poor (The total light transmittance is 2.5% or more and less than 3.0%.)
✕: Poor (The total light transmittance is 3.0% or more.)
⊙, ○ and △ are successful or acceptable.

(5) Film-formation stability

The stability was evaluated based on the number of times of the generation of film breaking. The evaluation was made in accordance with the number of times of the breaking per day. The stability was judged in accordance with the following criterion:

○: Good (The film is hardly broken (one time or less per day).)
△: Slightly poor (The film is sometimes broken (one to two times per day).)
✕: Poor (The film is frequently broken (two times or more per day).)
○ and △ are successful or acceptable.

Examples

The present invention will be described by way of the following examples; however, the invention is not limited thereto.

<Example 1>

(Production of polyethylene terephthalate pellets (PET))

Terephthalic acid and ethylene glycol were used as an acid component and a glycol component, respectively. Antimony trioxide (polymerization catalyst) was added thereto so as to set the amount of the catalyst to 300 ppm of polyester pellets to be obtained in terms of antimony atom, and then the reactive components were allowed to undergo polycondensation reaction to yield polyethylene terephthalate pellets (PET) having an intrinsic viscosity of 0.63 dL/g and an amount of a terminated carboxyl group of 40 equivalents/ton.

(Production of isophthalic acid copolymerized polyethylene terephthalate pellets (PET/I[12]))

A mixture of 88% by mol of terephthalic acid and 12% by mol of isophthalic acid was used as an acid component, and ethylene glycol was used as a glycol component. Antimony trioxide was added, as a polymerization catalyst, thereto so as to set the amount of the catalyst to 300 ppm of polyester pellets to be obtained in terms of antimony atom, and then the reactive components were allowed to undergo polycondensation reaction to yield isophthalic-acid-copolymerized polyethylene terephthalate (PET/I[12]) pellets having an intrinsic viscosity of 0.68 dL/g and an amount of a terminated carboxyl group of 40 equivalents/ton.

In order to form polyester layers (A) in a composite film-forming machine having an extruder (a) and an extruder (b), a mixture of raw materials shown in Table 1 was vacuum-dried at a temperature of 160°C for 5 hours, supplied to the extruder (a) side, and melt-extruded at a temperature of 280°C, filtrated through a 30-μm mesh filter to remove foreign substances, and then introduced into a T-die composite cap.

Abbreviations in Table 1 have the following denotations:

$TiO_2$-A(50): titanium dioxide master PET pellets produced by a sulfate process, the pellets having an average particle diameter of 0. 25 μm and a refractive index of 2.5 and containing 50% by weight of anatase type titanium particles;

$TiO_2$-R1 (50) : titanium dioxide master PET pellets produced by a sulfate process, the pellets having an average particle diameter of 0.25 μm and a refractive index of 2. 7 and containing 50% by weight of rutile type titanium particles;

$TiO_2$-R2 (50) : titanium dioxide master PET pellets produced by a chlorine process, the pellets having an average particle diameter of 0.22 μm and a refractive index of 2. 7 and containing 50% by weight of rutile type titanium particles;

$BaSO_4$(60)-PET/I[12]: barium sulfate master isophthalic acid copolymerized polyethylene terephthalate (PET/I[12]) pellets having an average particle diameter of 1 μm and a refractive index of 1.6 and containing 60% by weight of barium sulfate particles;

PMP: polymethylpentene (TPX DX820, manufactured by Mitsui Chemicals, Inc.);

PBT/PAG: "HYTREL (R)" (registered trade name) 7277 (manufactured by Du Pont-Tray Co., Ltd.), which is a block copolymer of polybutylene terephthalate (PBT) and polyalkylene glycol (PAG);

PEG (6): PET pellets with which 6% by weight of polyethylene glycol having a molecular weight of 4,000 is copolymerized; and

light resistant agent (10) : light resistant agent master PET pellets containing 10% by weight of a triazine type ultraviolet absorbent (CGX UVA006, manufactured by Ciba Specialty Chemicals Inc.).

In the meantime, in order to form a polyester layer (B), a mixture of raw materials shown in Table 1 was vacuum-dried at a temperature of 160°C for 5 hours, supplied to the extruder (b) side, and melt-extruded at a temperature of 280°C, filtrated through a 30-μm mesh filter to remove foreign substances, and then introduced into the T-die composite cap.

Next, inside the T-die composite cap, the extruded mixtures were jointed to each other to laminate the polyester layers (A) on both sides of the polyester layer (B) (A/B/A), and then co-extruded into a sheet form to produce a melted laminated sheet. The melted laminated sheet was allowed to adhere onto a drum, the surface temperature of which was kept at 18°C, by an electrostatic charge method, and cooled and solidified. In this way, a non-stretched laminated film was produced. Subsequently, the non-stretched laminated film was pre-heated with a group of rolls heated to a temperature of 85°C in accordance with a usual method, and then a heating roll of 90°C in temperature was used to stretch the film 3.3 times in the machine direction (the longitudinal direction). The film was then cooled between rolls having a temperature of 25°C to yield a monoaxially stretched film.

The resultant monoaxially stretched film was introduced into a preheating zone of 90°C in temperature inside a tenter while both ends of the film were grasped with clips. Subsequently, the film was successively stretched 3.2 times in the direction perpendicular to the machine direction (the width direction) in a heating zone of 100°C in temperature. Subsequently, the film was further subjected to thermal treatment at a temperature of 200°C in a thermal treatment zone inside the tenter for 10 seconds, and further subjected to treatment for a relaxation of 4% in the width direction at a temperature of 180°C. Thereafter, the film was further subjected to treatment for a relaxation of 1% in the width direction at a temperature of 140°C. Next, the film was evenly and slowly cooled, and then wound to yield a white laminated polyester film having a thickness of 250 μm and having a composite structure of three layers of A/B/A wherein the thicknesses (μm) of one of the polyester layers (A), the polyester layer (B) containing voids therein, and the other of the polyester layers (A) were 5/240/5. About the white laminated polyester film, the polyester layer (B) contained fine voids in a large number. The average size of the voids in the width direction was 11.0 μm, and that of the voids in the thickness direction was 1.3 μm.

A (C) layer having composition described below was applied onto one of the surfaces of the resultant film by kiss coating using a micro-gravure plate such that the thickness thereof is 2 μm after the application of the layer. The resultant was dried at 120°C for 1 minute. Furthermore, a surface cure (D) layer having composition described below was applied onto the (C) layer by kiss coating using a micro-gravure plate such that the thickness thereof is 4 μm after the application of the layer. The solvent was then dried off in a hot wind drier of 80°C in temperature, and then the lamination was irradiated with ultraviolet rays at a light quantity of 300 mJ/cm[2] from conveyer type metal halide lamps (manufactured by Eye Graphics Co., Ltd.), and the layers were cured. In this way, a white laminated polyester film having, on one of the surfaces thereof, a light resistant layer was yielded.

Coating structure of (C) layer:

2-(2'-Hydroxy-5'-methacryloxyethylphenyl)-2H-benzotri azole (30% by weight) copolymerized methyl methacrylate: 95 parts by weight

Modified saturated polyester resin "NIKKA COAT (registered trade name)" FS-12 (manufactured by Nippon Kako Toryo Co., Ltd.): 4 parts by weight
Methylated melamine "CYMEL" (registered trade name) 370 (manufactured by Mitsui Cytec): 1 part by weight
Toluene/methyl ethyl ketone = 1/1: 400 parts by weight

Coating structure of (D) layer:

2-(2'-Hydroxy-5'-methacryloxyethylphenyl)-2H-benzotri azole: 20 parts by weight
Dipentaerythritol hexaacrylate: 68 parts by weight
Acrylic oligomer "ALONIX" (registered trade name) M-7100 (Kyoeisha Chemical Co., Ltd.): 8 parts by weight
2-Hydroxypropyl acrylate: 4 parts by weight
IRGACURE (registered trade name) 183 (manufactured by Ciba-Geigy): 4 parts by weight
Toluene/methyl ethyl ketone = 1/1: 312 parts by weight

Properties of the thus-obtained white laminated polyester film having the light resistant cured layer are as shown in Table 3, and the film was a film which had a high reflectance and a concealing property and was also excellent in film-formation stability.

<Example 2>

The same way as in Example 1 was performed except that raw materials and conditions shown in Table 1 were used, and a white laminated polyester film having a thickness of 230 μm and having a composite structure of three layers of A/B/A wherein the thicknesses (μm) of one of the polyester layers (A), the polyester layer (B) containing voids therein, and the other of the polyester layers (A) were 15/200/15 was obtained. A light resistant cured layer was provided onto one side of the film in the same way as in Example 1. Properties of the resultant white laminated polyester film having the light resistant cured layer are as shown in Table 3. Although the reflectance and the concealing property were slightly poor, the film was acceptable.

<Example 3>

The same way as in Example 1 was performed except that raw materials and conditions shown in Table 1 were used, and a white laminated polyester film having a thickness of 250 μm and having a composite structure of three layers of A/B/A wherein the thicknesses (μm) of one of the polyester layers (A), the polyester layer (B) containing voids therein, and the other of the polyester layers (A) were 8/234/8 was obtained. In the present example, no light resistant cured layer was provided.
Properties of the resultant white laminated polyester film having the light resistant cured layer are as shown in Table 3. The film was a film which had a high reflectance and a concealing property and was also excellent in film-formation stability. Since no light resistant cured layer was provided, the capability to absorb ultraviolet rays was slightly poor.

<Example 4>

The same way as in Example 1 was performed except that raw materials and conditions shown in Table 1 were used, and a white laminated polyester film having a thickness of 250 μm and having a composite structure of three layers of A/B/A wherein the thicknesses (μm) of one of the polyester layers (A), the polyester layer (B) containing voids therein, and the other of the polyester layers (A) were 8/234/8 was obtained. A light resistant cured layer was provided onto one side of the film in the same way as in Example 1. Properties of the resultant white laminated polyester film having the light resistant cured layer are as shown in Table 3. The film had a particularly high reflectance although the film-formation stability tended to be slightly poor.

<Example 5>

The same way as in Example 1 was performed except that raw materials and conditions shown in Table 1 were used, and a white laminated polyester film having a thickness of 200 μm and having a composite structure of three layers of A/B/A wherein the thicknesses (μm) of one of the polyester layers (A), the polyester layer (B) containing voids therein, and the other of the polyester layers (A) were 15/170/15 was obtained. A light resistant cured layer was provided onto one side of the film in the same way as in Example 1. Properties of the resultant white laminated polyester film having the light resistant cured layer are as shown in Table 3. The concealing property was slightly poor; however, the film was acceptable.

<Example 6>

The same way as in Example 1 was performed except that raw materials and conditions shown in Table 1 were used, and a white laminated polyester film having a thickness of 250 $\mu$m and having a composite structure of three layers of A/B/A wherein the thicknesses ($\mu$m) of one of the polyester layers (A), the polyester layer (B) containing voids therein, and the other of the polyester layers (A) were 8/234/8 was obtained. A light resistant cured layer was provided onto one side of the film in the same way as in Example 1. Properties of the resultant white laminated polyester film having the light resistant cured layer are as shown in Table 3. The reflectance was slightly poor; however, the film was acceptable.

<Example 7>

The same way as in Example 1 was performed except that raw materials and conditions shown in Table 1 were used and the thermal treatment temperature was changed to 185°C, and a white laminated polyester film having a thickness of 190 $\mu$m and having a composite structure of three layers of A/B/A wherein the thicknesses ($\mu$m) of one of the polyester layers (A), the polyester layer (B) containing voids therein, and the other of the polyester layers (A) were 15/160/15 was obtained. A light resistant cured layer was provided onto one side of the film in the same way as in Example 1. Properties of the resultant white laminated polyester film having the light resistant cured layer are as shown in Table 3. The reflectance and the concealing property were slightly poor; however, the film was acceptable.

<Example 8>

The same way as in Example 1 was performed except that raw materials and conditions shown in Table 1 were used, and a white laminated polyester film having a thickness of 300 $\mu$m and having a composite structure of three layers of A/B/A wherein the thicknesses ($\mu$m) of one of the polyester layers (A), the polyester layer (B) containing voids therein, and the other of the polyester layers (A) were 8/284/8 was obtained. A light resistant cured layer was provided onto one side of the film in the same way as in Example 1. Properties of the resultant white laminated polyester film having the light resistant cured layer are as shown in Table 3. Both of the reflectance and the concealing property were particularly high, and the film had excellent properties.

<Example 9>

The same way as in Example 1 was performed except that raw materials and conditions shown in Table 1 were used, and a white laminated polyester film having a thickness of 400 $\mu$m and having a composite structure of three layers of A/B/A wherein the thicknesses ($\mu$m) of one of the polyester layers (A), the polyester layer (B) containing voids therein, and the other of the polyester layers (A) were 8/384/8 was obtained. A light resistant cured layer was provided onto one side of the film in the same way as in Example 1. Properties of the resultant white laminated polyester film having the light resistant cured layer are as shown in Table 3. Both of the reflectance and the concealing property were particularly high, and the film had excellent properties.

<Example 10>

The same way as in Example 1 was performed except that raw materials and conditions shown in Table 1 were used, and a white laminated polyester film having a thickness of 250 $\mu$m and having a composite structure of three layers of A/B/A wherein the thicknesses ($\mu$m) of one of the polyester layers (A), the polyester layer (B) containing voids therein, and the other of the polyester layers (A) were 5/240/5 was obtained. However, no light resistant cured layer was provided. Properties of the resultant white laminated polyester film having the light resistant cured layer are as shown in Table 3. Both of the reflectance and the concealing property were particularly high, and the film had excellent properties.

<Example 11>

The same way as in Example 1 was performed except that raw materials and conditions shown in Table 1 were used, and a white laminated polyester film having a thickness of 180 $\mu$m and having a composite structure of three layers of A/B/A wherein the thicknesses ($\mu$m) of one of the polyester layers (A), the polyester layer (B) containing voids therein, and the other of the polyester layers (A) were 15/150/15 was obtained. A light resistant cured layer was provided onto one side of the film in the same way as in Example 1. Properties of the resultant white laminated polyester film having the light resistant cured layer are as shown in Table 3.

<Comparative Example 1>

The same way as in Example 1 was performed except that raw materials and conditions shown in Table 2 were used, and a white laminated polyester film having a thickness of 250 $\mu$m and having a composite structure of three layers of A/B/A wherein the thicknesses ($\mu$m) of one of the polyester layers (A), the polyester layer (B) containing voids therein, and the other of the polyester layers (A) were 20/210/20 was obtained. A light resistant cured layer was provided onto one side of the film in the same way as in Example 1. Properties of the resultant white laminated polyester film having the light resistant cured layer are as shown in Table 4. The film was poor in reflectance.

<Comparative Example 2>

The same way as in Example 1 was performed except that raw materials and conditions shown in Table 2 were used, and a white laminated polyester film having a thickness of 250 $\mu$m and having a composite structure of three layers of A/B/A wherein the thicknesses ($\mu$m) of one of the polyester layers (A), the polyester layer (B) containing voids therein, and the other of the polyester layers (A) were 3/244/3 was obtained. A light resistant cured layer was provided onto one side of the film in the same way as in Example 1. Properties of the resultant white laminated polyester film having the light resistant cured layer are as shown in Table 4. The film was poor in film-formation stability although the reflectance and the concealing property were acceptable.

<Comparative Example 3>

The same way as in Example 1 was performed except that raw materials and conditions shown in Table 2 were used, and a white laminated polyester film having a thickness of 250 $\mu$m and having a composite structure of three layers of A/B/A wherein the thicknesses ($\mu$m) of one of the polyester layers (A), the polyester layer (B) containing voids therein, and the other of the polyester layers (A) were 15/220/15 was obtained. A light resistant cured layer was provided onto one side of the film in the same way as in Example 1. Properties of the resultant white laminated polyester film having the light resistant cured layer are as shown in Table 4. The film was poor in reflectance.

<Comparative Example 4>

The same way as in Example 1 was performed except that raw materials and conditions shown in Table 2 were used, and a white laminated polyester film having a thickness of 250 $\mu$m and having a composite structure of three layers of A/B/A wherein the thicknesses ($\mu$m) of one of the polyester layers (A), the polyester layer (B) containing voids therein, and the other of the polyester layers (A) were 8/234/8 was obtained. A light resistant cured layer was provided onto one side of the film in the same way as in Example 1. Properties of the resultant white laminated polyester film having the light resistant cured layer are as shown in Table 4. The film was poor in reflectance and concealing property.

<Comparative Example 5>

The same way as in Example 1 was performed except that raw materials and conditions shown in Table 2 were used, and a white laminated polyester film having a thickness of 250 $\mu$m and having a composite structure of three layers of A/B/A wherein the thicknesses ($\mu$m) of one of the polyester layers (A), the polyester layer (B) containing voids therein, and the other of the polyester layers (A) were 8/234/8 was obtained. A light resistant cured layer was provided onto one side of the film in the same way as in Example 1. Properties of the resultant white laminated polyester film having the light resistant cured layer are as shown in Table 4. The film was poor in reflectance.

<Comparative Example 6>

The same way as in Example 1 was performed except that raw materials and conditions shown in Table 2 were used, and an attempt for producing a white laminated polyester film having a thickness of 250 $\mu$m and having a composite structure of three layers of A/B/A wherein the thicknesses ($\mu$m) of one of the polyester layers (A), the polyester layer (B) containing voids therein, and the other of the polyester layers (A) were 8/234/8 was made. However, breaking was frequently generated so that no film was able to be formed.

<Comparative Example 7>

The same way as in Example 1 was performed except that raw materials and conditions shown in Table 2 were used, and a white laminated polyester film having a thickness of 250 $\mu$m and having a composite structure of three layers of A/B/A wherein the thicknesses ($\mu$m) of one of the polyester layers (A), the polyester layer (B) containing voids therein, and the other of the polyester layers (A) were 8/234/8 was obtained. A light resistant cured layer was provided onto one side of the film in the same way as in Example 1. Properties of the resultant white laminated polyester film having the light resistant cured layer are as shown in Table 4. The film was poor in reflectance and concealing property.

<Comparative Example 8>

The same way as in Example 1 was performed except that raw materials and conditions shown in Table 2 were used, and a white laminated polyester film having a thickness of 250 $\mu$m and having a composite structure of three layers of A/B/A wherein the thicknesses ($\mu$m) of one of the polyester layers (A), the polyester layer (B) containing voids therein, and the other of the polyester layers (A) were 8/234/8 was obtained. A light resistant cured layer was provided onto one side of the film in the same way as in Example 1. Properties of the resultant white laminated polyester film having the light resistant cured layer are as shown in Table 4. The film was poor in reflectance and concealing property.

<Comparative Example 9>

The same way as in Example 1 was performed except that raw materials and conditions shown in Table 2 were used, and a white laminated polyester film having a thickness of 160 $\mu$m and having a composite structure of three layers of A/B/A wherein the thicknesses ($\mu$m) of one of the polyester layers (A), the polyester layer (B) containing voids therein, and the other of the polyester layers (A) were 15/130/15 was obtained. A light resistant cured layer was provided onto one side of the film in the same way as in Example 1. Properties of the resultant white laminated polyester film having the light resistant cured layer are as shown in Table 4. The film was poor in concealing property.

<Comparative Example 10>

The same way as in Example 1 was performed except that raw materials and conditions shown in Table 2 were used and the thermal treatment temperature was changed to 185°C, and a white laminated polyester film having a thickness of 180 $\mu$m and having a composite structure of three layers of A/B/A wherein the thicknesses ($\mu$m) of one of the polyester layers (A), the polyester layer (B) containing voids therein, and the other of the polyester layers (A) were 15/150/15 was obtained. A light resistant cured layer was provided onto one side of the film in the same way as in Example 1. Properties of the resultant white laminated polyester film having the light resistant cured layer are as shown in Table 4. The film was poor in reflectance and concealing property.

<Comparative Example 11>

The same way as in Example 1 was performed except that raw materials and conditions shown in Table 2 were used and the thermal treatment temperature was changed to 185°C, and an attempt for producing a white laminated polyester film having a thickness of 180 $\mu$m and having a composite structure of three layers of A/B/A wherein the thicknesses ($\mu$m) of one of the polyester layers (A), the polyester layer (B) containing voids therein, and the other of the polyester layers (A) were 15/150/15 was made. However, breaking was frequently generated so that no film was able to be formed.

<Comparative Example 12>

The same way as in Example 1 was performed except that raw materials and conditions shown in Table 2 were used, and a white laminated polyester film having a thickness of 188 $\mu$m and having a composite structure of three layers of A/B/A wherein the thicknesses ($\mu$m) of one of the polyester layers (A), the polyester layer (B) containing no voids therein, and the other of the polyester layers (A) were 15/158/15 was obtained. A light resistant cured layer was provided onto one side of the film in the same way as in Example 1. Properties of the resultant white laminated polyester film having the light resistant cured layer are as shown in Table 4. The film was largely poor in reflectance.

[Table 1]

| | | Used raw materials (unit: % by weight) | | | | | | | | | |
|---|---|---|---|---|---|---|---|---|---|---|---|
| | | PET | PET/I[12] | PMP | PBT/PAG | PEG (6) | TiO$_2$-A (50) | TiO$_2$-R1 (50) | TiO$_2$-R2 (50) | BaSO$_4$ (60) - PET/I[12] | Light resistant agent (10) |
| Example 1 | Polyester layer (A) | 70 | | | | | | 30 | | | |
| | Polyester layer (B) | 82 | | 15 | 3 | | | | | | |
| Example 2 | Polyester layer (A) | 92 | | | | | | 8 | | | |
| | Polyester layer (B) | 84 | | 13 | 3 | | | | | | |
| Example 3 | Polyester layer (A) | 86 | | | | | | | 14 | | |
| | Polyester layer (B) | 80 | | 15 | 3 | | | | 2 | | |
| Example 4 | Polyester layer (A) | 90 | | | | | | | 10 | | |
| | Polyester layer (B) | 75 | | 20 | 5 | | | | | | |
| Example 5 | Polyester layer (A) | 94 | | | | | | 6 | | | |
| | Polyester layer (B) | 82 | | 15 | 3 | | | | | | |
| Example 6 | Polyester layer (A) | 86 | | | | | 14 | | | | |
| | Polyester layer (B) | 80 | | 15 | 3 | | 2 | | | | |
| Example 7 | Polyester layer (A) | | 90 | | | | | 10 | | | |
| | Polyester layer (B) | | 35 | | | | | | | 65 | |

EP 2 228 670 A1

(continued)

| | | Used raw materials (unit: % by weight) | | | | | | | | | |
|---|---|---|---|---|---|---|---|---|---|---|---|
| | | PET | PET/I[12] | PMP | PBT/PAG | PEG (6) | TiO$_2$-A (50) | TiO$_2$-R1 (50) | TiO$_2$-R2 (50) | BaSO$_4$ (60) - PET/I[12] | Light resistant agent (10) |
| Example 8 | Polyester layer (A) | 90 | | | | | | | 10 | | |
| | Polyester layer (B) | 76 | | 19 | 5 | | | | | | |
| Example 9 | Polyester layer (A) | 90 | | | | | | | 10 | | |
| | Polyester layer (B) | 82 | | 15 | 3 | | | | | | |
| Example 10 | Polyester layer (A) | 50 | | | | | | | 30 | | 20 |
| | Polyester layer (B) | 82 | | 15 | 3 | | | | | | |
| Example 11 | Polyester layer (A) | | 94 | | | | | | 6 | | |
| | Polyester layer (B) | | 35 | 12 | 3 | | | | | 50 | |

EP 2 228 670 A1

Table 2

| | | Used raw materials (unit: % by weight) | | | | | | | | |
|---|---|---|---|---|---|---|---|---|---|---|
| | | PET | PET/I[12] | PMP | PBT/PAG | PEG (6) | TiO$_2$-A (50) | TiO$_2$-R1 (50) | TiO$_2$-R2 (50) | BaSO$_4$ (60) - PET/I[12] |
| Comparative Example 1 | Polyester layer (A) | 70 | | | | | | 30 | | |
| | Polyester layer (B) | 82 | | 15 | 3 | | | | | |
| Comparative Example 2 | Polyester layer (A) | 90 | | | | | | 10 | | |
| | Polyester layer (B) | 82 | | 15 | 3 | | | | | |
| Comparative Example 3 | Polyester layer (A) | 60 | | | | | | 40 | | |
| | Polyester layer (B) | 82 | | 15 | 3 | | | | | |
| Comparative Example 4 | Polyester layer (A) | 98 | | | | | 2 | | | |
| | Polyester layer (B) | 76 | | 15 | 3 | | 6 | | | |
| Comparative Example 5 | Polyester layer (A) | 90 | | | | | 10 | | | |
| | Polyester layer (B) | 72 | | 15 | 3 | | 10 | | | |
| Comparative Example 6 | Polyester layer (A) | 86 | | | | | | 14 | | |
| | Polyester layer (B) | 69 | | 26 | 5 | | | | | |
| Comparative Example 7 | Polyester layer (A) | 90 | | | | | | | | 10 |
| | Polyester layer (B) | 82 | | 15 | 3 | | | | | |
| Comparative Example 8 | Polyester layer (A) | 86 | | | | | | 14 | | |
| | Polyester layer (B) | 75 | | 10 | | 15 | | | | |
| Comparative Example 9 | Polyester layer (A) | 86 | | | | | | 14 | | |
| | Polyester layer (B) | 82 | | 15 | 3 | | | | | |
| Comparative Example 10 | Polyester layer (A) | 86 | | | | | | 14 | | |
| | Polyester layer (B) | | 60 | | | | | | | 40 |
| Comparative Example 11 | Polyester layer (A) | 86 | | | | | | 14 | | |
| | Polyester layer (B) | | | | | | | | | 100 |
| Comparative Example 12 | Polyester layer (A) | 86 | | | | | 14 | | | |
| | Polyester layer (B) | 68 | | | | | 32 | | | |

Table 3

| | Polyester layer (A) | | Polyester layer (B) | | | | | | | TiO$_2$particle species | Apparent density (g/cm$^3$) | Average reflectance | | Total light transmittance (concealling property) (%) | Film-formation stability |
|---|---|---|---|---|---|---|---|---|---|---|---|---|---|---|---|
| | | | | | | Insoluble resin | | | Content (% by weight) of inorganic particles other than TiO$_2$ | | | 320-360 nm (%) | 420-670 nm (%) | | |
| | Thickness (μm) | Content of TiO$_2$ (% by weight) | Thickness (μm) | Content of TiO$_2$ (% by weight) | Content (% by weight) | Size width (μm) | Size (thickness) (μm) | | | | | | | | |
| Example 1 | 5 | 15 | 240 | 0 | 15 | 2.5 | 1.2 | 0 | Rutile type (sulfate process) | 0.71 | 4.9 | 101.6 ○ | 2.20 ○ | ○ |
| Example 2 | 15 | 4 | 200 | 0 | 13 | 2.3 | 1.2 | 0 | Rutile type (sulfate process) | 0.79 | 5.0 | 100.6 △ | 2.95 △ | ○ |
| Example 3 | 8 | 7 | 234 | 1 | 15 | 2.5 | 1.2 | 0 | Rutile type (chlorine process) | 0.71 | 11.0 | 101.6 ○ | 2.40 ○ | ○ |
| Example 4 | 8 | 5 | 234 | 0 | 20 | 2.6 | 1.6 | 0 | Rutile type (chlorine process) | 0.64 | 4.9 | 102.1 ⊚ | 2.35 ○ | △ |
| Example 5 | 15 | 3 | 170 | 0 | 15 | 2.5 | 1.2 | 0 | Rutile type (sulfate process) | 0.72 | 5.0 | 101.0 ○ | 2.90 △ | ○ |
| Example 6 | 8 | 7 | 234 | 1 | 15 | 2.5 | 1.3 | 0 | Anatase type (sulfate process) | 0.71 | 4.9 | 100.8 △ | 2.42 ○ | ○ |
| Example 7 | 15 | 5 | 160 | 0 | 0 | - | - | 39 | Rutile type (sulfate | 1.26 | 4.9 | 100.8 ○ | 2.60 △ | ○ |

| | Polyester layer (A) | | Polyester layer (B) | | | | | | TiO$_2$ particle species | Apparent density (g/cm$^3$) | Average reflectance | | Total light transmittance (concealling property) (%) | Film-formation stability |
| | Thickness (μm) | Content of TiO$_2$ (% by weight) | Thickness (μm) | Content of TiO$_2$ (% by weight) | Insoluble resin | | | Content (% by weight) of inorganic particles other than TiO$_2$ | | | | | | |
| | | | | | Content (% by weight) | Size width (μm) | Size (thickness) (μm) | | | | 320-360 nm (%) | 420-670 nm (%) | | |
| Example 8 | 8 | 5 | 284 | 0 | 19 | 2.6 | 1.4 | 0 | Rutile type (chlorine process) | 0.66 | 5.0 | 102.1 ⊚ | 1.80 ⊚ | ○ |
| Example 9 | 8 | 5 | 384 | 0 | 15 | 2.4 | 1.2 | 0 | Rutile type (chlorine process) | 0.69 | 5.1 | 102.2 ⊚ | 1.68 ⊚ | ○ |
| Example 10 | 5 | 15 | 240 | 0 | 15 | 2.5 | 1.2 | 0 | Rutile type (chlorine process) | 0.71 | 5.6 | 101.5 ○ | 2.10 ○ | ○ |
| Example 11 | 15 | 3 | 150 | 0 | 12 | 2.2 | 1.1 | 0 | Rutile type (chlorine process) | 1.12 | 5.1 | 101.3 ○ | 2.55 △ | △ |

EP 2 228 670 A1

[Table 4]

| | Polyester layer (A) | | Polyester layer (B) | | | | | | TiO$_2$ particle species | Apparent density (g/cm$^3$) | Average reflectance | | Total light transmittance (concealing property) (%) | Film-formation stability |
| | | | | | Insoluble resin | | | Content (% by weight) of inorganic particles other than TiO$_2$ | | | | | | |
| | Thickness ($\mu$m) | Content of TiO$_2$ (% by weight) | Thickness ($\mu$m) | Content of TiO$_2$ (% by weight) | Content (% by weight) | Size (width) ($\mu$m) | Size (thickness) ($\mu$m) | | | | 320-360 nm (%) | 420-670 nm (%) | | |
|---|---|---|---|---|---|---|---|---|---|---|---|---|---|---|
| Comparative Example 1 | 20 | 15 | 210 | 0 | 15 | 2.4 | 1.2 | 0 | Rutile type (sulfate process) | 0.72 | 5.1 | 99.5 × | 2.16 ○ | ○ |
| Comparative Example 2 | 3 | 5 | 244 | 0 | 15 | 2.5 | 1.2 | 0 | Rutile type (sulfate process) | 0.70 | 4.9 | 100.9 △ | 2.60 △ | × |
| Comparative Example 3 | 15 | 20 | 220 | 0 | 15 | 2.5 | 1.2 | 0 | Rutile type (sulfate process) | 0.75 | 5.0 | 99.3 × | 2.15 ○ | ○ |
| Comparative Example 4 | 8 | 1 | 234 | 3 | 15 | 2.5 | 1.6 | 0 | Anatase type (sulfate process) | 0.71 | 5.1 | 99.2 × | 3.10 × | ○ |
| Comparative Example 5 | 8 | 5 | 234 | 5 | 15 | 2.5 | 1.2 | 0 | Anatase type (sulfate process) | 0.71 | 5.0 | 98.4 × | 2.05 ○ | ○ |
| Comparative Example 6 | 8 | 7 | 234 | 0 | 26 | - | - | 0 | Rutile type (sulfate process) | No film formed | | | | × |
| Comparative Example 7 | 8 | 0 | 234 | 0 | 15 | 2.5 | 1.2 | 0 | Not contained | 0.72 | 5.0 | 99.8 × | 3.05 × | ○ |

(continued)

| | Polyester layer (A) | | Polyester layer (B) | | | | | | TiO$_2$ particle species | Apparent density (g/cm$^3$) | Average reflectance | | Total light transmittance (concealing property) (%) | Film-formation stability |
| | Thickness ($\mu$m) | Content of TiO$_2$ (% by weight) | Thickness ($\mu$m) | Content of TiO$_2$ (% by weight) | Insoluble resin | | | Content (% by weight) of inorganic particles other than TiO$_2$ | | | 320-360 nm (%) | 420-670 nm (%) | | |
| | | | | | Content (% by weight) | Size (width) ($\mu$m) | Size (thickness) ($\mu$m) | | | | | | | |
| Comparative Example 8 | 8 | 7 | 234 | 0 | 10 | 4.9 | 2.1 | 0 | Rutile type Rutile type (sulfate process) | 0.84 | 4.9 | 97.0 × | 4.96 × | ○ |
| Comparative Example 9 | 15 | 7 | 130 | 0 | 15 | 2.5 | 1.2 | 0 | Rutile type (sulfate process) | 0.74 | 5.2 | 100.4 △ | 3.67 × | ○ |
| Comparative Example 10 | 15 | 7 | 150 | 0 | 0 | - | - | 24 | Rutile type (sulfate process) | 1.28 | 5.0 | 98.0 × | 3.10 × | ○ |
| Comparative Example 11 | 15 | 7 | 150 | 0 | 0 | - | - | 60 | Rutile type (sulfate process) | No film formed | | | | × |
| Comparative Example 12 | 15 | 7 | 158 | 16 | 0 | - | - | 0 | Anatase type (sulfate process) | 1.48 | 5.1 | 95.1 × | 1.88 ◎ | ○ |

BRIEF DESCRIPTION OF THE DRAWINGS

Fig. 1 is a sectional view of a void generated around a insoluble resin.
Fig. 2 is a sectional view of a void wherein no insoluble resin is observed.

EXPLANATION OF REFERENCE NUMERALS

1   resin which is not soluble in polyester
2   void
3   void width
4   void thickness
5   insoluble resin width
6   insoluble resin thickness

INDUSTRIAL APPLICABILITY

The present invention relates to a white laminated polyester film for a reflecting sheet. More specifically, the invention relates to a polyester film that has a laminated structure, is excellent in reflecting property and concealing property, and is high in productivity. The invention relates to a white laminated polyester film that can be suitably used as a reflecting sheet of a backlight device and a lamp reflector for image display, a reflecting sheet of a lighting instrument, a reflecting sheet for a lighting signboard, a rear reflecting sheet for a solar cell, or the like.

**Claims**

1.  A white laminated polyester film for a reflecting sheet, comprising a polyester layer (B) containing voids therein, and a polyester layer (A) laminated at least on one surface side of the layer (B), the laminated polyester film satisfying the following (1) to (5):

    (1) the thickness of the polyester layer (A) laminated at least on one surface side is from 5 to 15 $\mu$m,
    (2) the polyester layer (A) contains therein particles having a refractive index of 2.0 or more in an amount of 3 to 15% by weight of the polyester layer (A),
    (3) the thickness of the polyester layer (B) is 150 $\mu$m or more,
    (4) the amount of particles having a refractive index of 2.0 or more contained in the polyester layer (B) is 2% or less by weight of the polyester layer (B), and
    (5) the polyester layer (B) contains therein a resin which is not soluble in polyester resin in an amount of 12 to 25% by weight of the polyester layer (B) and/or inorganic particles having a refractive index less than 2.0 in an amount of 30 to 50% by weight of the polyester layer (B).

2.  The white laminated polyester film for a reflecting sheet according to claim 1, wherein the particles contained in the polyester layer (A), which have a refractive index of 2.0 or more, are titanium dioxide particles.

3.  The white laminated polyester film for a reflecting sheet according to claim 1 or 2, wherein the thickness of the polyester layer (A) is from 5 to 10 $\mu$m, and further that of the polyester layer (B) is from 200 to 400 $\mu$m.

4.  The white laminated polyester film for a reflecting sheet according to claim 2, wherein the titanium dioxide particles contained in the polyester layer (A) are made mainly of rutile type particles.

5.  The white laminated polyester film for a reflecting sheet according to claim 4, wherein the titanium dioxide particles contained in the polyester layer (A) are made mainly of the rutile type particles produced by a chlorine process.

6.  The white laminated polyester film for a reflecting sheet according to claim 1, wherein one or more resin constituting the polyester layer (A) and the polyester layer (B) have polyethylene terephthalate as a basic structure thereof.

7.  The white laminated polyester film for a reflecting sheet according to claim 1, wherein the resin which is not soluble in polyester resin, which is contained in the polyester layer (B), is a polymethylpentene.

8.  The white laminated polyester film for a reflecting sheet according to claim 7, wherein the average particle size of the polymethylpentene in the polyester layer (B) is 3 $\mu$m or less in the width direction and is 2 $\mu$m or less in the thickness direction.

9.  The white laminated polyester film for a reflecting sheet according to claim 1, wherein the inorganic particles having a refractive index of less than 2.0, which are contained in the polyester layer (B), are barium sulfate.

10. The white laminated polyester film for a reflecting sheet according to claim 1, comprising, on at least one surface thereof, a coating layer having capability to absorb ultraviolet rays.

11. The white laminated polyester film for a reflecting sheet according to claim 1, wherein the polyester layer (A) contains therein a light resistant agent in an amount of 0.05 to 10% by weight of the polyester layer (A).

12. The white laminated polyester film for a reflecting sheet according to claim 1, wherein the polyester layer (A) side is used as a light reflecting surface.

13. The white laminated polyester film for a reflecting sheet according to claim 1, which is a rear reflecting sheet of a backlight for a liquid crystal display, a light reflecting surface of the rear reflecting sheet being in the polyester layer (A) side of the film.

[Fig. 1]

[Fig. 2]

<table>
<tr><td colspan="2">**INTERNATIONAL SEARCH REPORT**</td><td colspan="2">International application No.<br>PCT/JP2007/074923</td></tr>
</table>

| A. CLASSIFICATION OF SUBJECT MATTER |
|---|
| *G02B5/08*(2006.01)i, *B32B27/36*(2006.01)i, *C08K7/18*(2006.01)i, *C08L67/00* (2006.01)i, *G02F1/1335*(2006.01)i |

According to International Patent Classification (IPC) or to both national classification and IPC

| B. FIELDS SEARCHED |
|---|
| Minimum documentation searched (classification system followed by classification symbols)<br>G02B5/08, B32B27/36, C08K7/18, C08L67/00, G02F1/1335 |

Documentation searched other than minimum documentation to the extent that such documents are included in the fields searched

| Jitsuyo Shinan Koho | 1922-1996 | Jitsuyo Shinan Toroku Koho | 1996-2008 |
|---|---|---|---|
| Kokai Jitsuyo Shinan Koho | 1971-2008 | Toroku Jitsuyo Shinan Koho | 1994-2008 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 2003-59324 A (Mitsubishi Shindoh Co., Ltd.),<br>28 February, 2003 (28.02.03),<br>Claims; Par. Nos. [0007], [0012] to [0024]<br>(Family: none) | 1-3,7<br>4-6,8-13 |
| Y<br>A | JP 2006-89599 A (Sumitomo Dow Ltd.),<br>06 April, 2006 (06.04.06),<br>Par. Nos. [0021], [0022], [0065]<br>(Family: none) | 4,5<br>2 |
| Y<br>A | JP 2007-261260 A (Toray Industries, Inc.),<br>11 October, 2007 (11.10.07),<br>Full text; all drawings<br>(Family: none) | 6,8-13<br>1,7 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>28 February, 2008 (28.02.08) | Date of mailing of the international search report<br>11 March, 2008 (11.03.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2007/074923 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-330727 A  (Teijin Dupont Film Kabushiki Kaisha), 25 November, 2004 (25.11.04), Claims; Par. No. [0032] (Family: none) | 6,9-11 |
| A | JP 2001-225433 A  (Toyobo Co., Ltd.), 21 August, 2001 (21.08.01), Full text; all drawings (Family: none) | 12,13 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004330727 A
- JP 4239540 A
- WO 9701117 A
- JP 2001225433 A
- JP 2002138150 A
- JP 2004294611 A